(19) Europäisches Patentamt European Patent Office Office européen des brevets

(11) **EP 4 675 914 A1**

(12) **EUROPEAN PATENT APPLICATION**

(43) Date of publication:
**07.01.2026 Bulletin 2026/02**

(21) Application number: **24306110.8**

(22) Date of filing: **04.07.2024**

(51) International Patent Classification (IPC):
**H02P 29/024** $^{(2016.01)}$

(52) Cooperative Patent Classification (CPC):
**H02P 29/024; H02P 2207/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R & D Centre Europe B.V.**
**1119 NS Schiphol Rijk (NL)**
Designated Contracting States:
**FR**

• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventor: **VOYER, Nicolas**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(54) **A METHOD AND A DEVICE FOR DETERMINING STATIC AND DYNAMIC ECCENTRICITIES OF AN ELECTRIC MOTOR**

(57) The present invention concerns a device and a method for determining static and dynamic eccentricities of an electric motor. The invention:
- obtains voltage and current waveforms of the electric motor;
- obtains a waveform representative of an apparent inductance of the motor from the obtained voltage and current waveforms;
- determines an average value ($L_{DC}$) and an oscillating component value ($\Delta L$) of the apparent inductance of the motor from the obtained waveform representative of the apparent inductance of the motor;
- determines a reference apparent inductance value ($L_o$) expected in absence of eccentricity;
- determines static and dynamic eccentricities from the determined average value and the determined oscillating component value of the apparent inductance of the motor and from the determined reference apparent inductance of the motor.

S40 — Obtain U(t), I(t) waveforms

S41 — Obtain L(t) waveform

S42 — Obtain $L_{DC}$ and $\Delta L_{fr}$

S43 — Obtain $L_0$

S44 — Determine eccentricity levels

Fig. 4

EP 4 675 914 A1

**Description**

TECHNICAL FIELD

The present invention relates generally to a method and a device for determining static and dynamic eccentricities of an electric motor.

RELATED ART

Static eccentricity occurs when symmetry axis of stator and of rotor are not aligned. Dynamic eccentricity occurs when the rotational axis differs from the rotor symmetry axis. When both static and dynamic eccentricities are present, the apparent airgap between stator and rotor varies in time, producing fluctuations of torque, causing vibrations.

Vibrations are cause of noise and fatigue, that can potentially lead to break of mechanical parts.

Optical micrometers can detect the movement of the motor shaft with high precision in order to determine the evolution of eccentricity with good accuracy but are bulky and must be installed on areas safe of vibrations.

Accelerometers and/or acoustic sensors can detect the level of vibrations, though disconnected from the eccentricity level, and still come at additional equipment cost to the industrial application.

Detecting trace of fault with Motor Current Signal Analysis (MCSA), relies on the presence in motor current signal of fault signature signal which is representative of the level of eccentricity fault.

As example, such fault signal can be detected from motor current waveforms, using time-frequency analysis (STFT, SFFT) or heterodyne demodulation at desired fault frequency. In presence of fault, a fault signal can be detected at specific frequency representative of nature of fault.

As the level of fault signal results from the presence of a mix of static and dynamic eccentricities, it is difficult to decide if the cause of the detected fault primarily results from misalignment of stator and rotor (static eccentricity) or if the rotor is no longer aligned with the rotational axis (dynamic eccentricity).

In addition, the level detected with MCSA is not clearly related to the level of vibration and noise. It is therefore difficult to set decision threshold on the observed level of harmonic for the purpose of maintenance action.

Furthermore, the level of detected fault signal is heavily impacted by the nature of the control applied to the motor. As example, closed loop current controller which aims at producing perfect current sinewaves, will naturally reduce the level of harmonic produced by eccentricity in comparison with what would otherwise be produced by open-loop controllers.

SUMMARY OF THE INVENTION

The present invention aims to get a clear estimation of static and dynamic eccentricity levels from analysis of electrical waveforms that is equally valid for any controller structure.

To that end, the present invention concerns a method for determining static and dynamic eccentricities of an electric motor, characterized in that the method comprises the steps of:

- obtaining voltage and current waveforms of the electric motor;
- obtaining a waveform representative of an apparent inductance of the motor from the obtained voltage and current waveforms;
- determining an average value ($L_{DC}$) and an oscillating component value ($\Delta L_{fr}$) of the apparent inductance of the motor from the obtained waveform representative of the inductance of the motor;
- determining a reference apparent inductance value ($L_o$) expected in absence of eccentricity;
- determining static and dynamic eccentricities from the determined average value and the determined oscillating component value of the apparent inductance of the motor and from the determined reference apparent inductance of the motor.

The present invention also concerns a device for determining eccentricities of an electric motor, characterized in that the device comprises:

- means for obtaining voltage and current waveforms of the electric motor;
- means for obtaining a waveform representative of an apparent inductance of the motor from the obtained voltage and current waveforms;
- means for determining an average value ($L_{DC}$) and an oscillating component value ($\Delta L_{fr}$) of the inductance of the motor from the obtained waveform representative of the apparent inductance of the motor;
- means for determining a reference apparent inductance value ($L_o$) expected in absence of eccentricity;
- means for determining static and dynamic eccentricities from the determined average value and the determined oscillating component value of the apparent inductance of the motor and from the determined reference apparent inductance of the motor.

Thus, as the apparent inductance waveform reflects variation of airgap, the present invention enables a clear estimation of static and dynamic eccentricity levels from analysis of electrical waveforms that is equally valid for any controller structure. As the apparent inductance of the motor varies with the speed and the torque applied to the motor, this variation is compensated by the determination of the reference apparent inductance for that torque and speed. The difference between estimated apparent inductance and reference apparent inductance only carries time variations of the inductance that results from the eccentricity levels. The static eccentricity is revealed in the difference between average inductance and reference apparent inductance at the same torque and speed condition, while the variations of apparent inductance with rotor position reveal the dynamic eccentricity that causes the fluctuation of inductance with rotor position.

According to a particular feature, the voltage waveform is representative of a voltage reference and the current waveform is obtained in a dq framework rotating at stator frequency.

Thus, the voltage and current waveforms are available in motor controller that operates in dq framework. The voltage and current waveforms are represented as 2D vectors in Fresnel representation, from which can get determined the apparent inductance of the motor.

According to a particular feature, the inductance waveform is estimated as:
$$\hat{L}_{dq} = \frac{(|V_q^* I_d - V_d^* I_q|)}{\omega_s (I_d^2 + I_q^2)}$$
, where $\omega_s = 2\pi f_s$, is the angular speed of the dq framework. Thus, the waveform of the apparent inductance is easily determined from current and voltage waveforms in any situation.

According to a particular feature, the voltage waveform is representative of a voltage reference and the current waveform is representative of polyphase current signals, where the polyphase current signals are transformed in an $\alpha\beta$

$$\hat{L}_{\alpha\beta} = \frac{|V_\beta I_\alpha - V_\alpha I_\beta|}{\omega_s \left(I_\alpha^2 + I_\beta^2\right)}$$

framework with Concordia transformation and the apparent inductance waveform is estimated as:
where $V_\alpha$ is the voltage in $\alpha$ axis, $I_\alpha$ is the current in $a$ axis, $V_\beta$ is the voltage in $\beta$ axis, $I_\beta I_\beta$ is the current in $\beta$ axis and where the Concordia transformation is defined as:

$$\hat{X}_{\alpha\beta} = \sqrt{2/3} \begin{bmatrix} 1 & -1/2 & -1/2 \\ 0 & \sqrt{3}/2 & -\sqrt{3}/2 \end{bmatrix} \hat{X}_{abc}$$

Thus, the polyphase vectors of current and voltage can be represented as 2D vectors, from which apparent impedance is easily determined using e.g. the line voltage and current of each phase of the electrical motor.

According to a particular feature, the voltage waveform is representative of a voltage reference of a single phase and the current waveform is the current flowing through the single phase of the electrical motor.

Thus, the method can get implemented using a single current probe, reducing the number of probes needed to implement the invention.

According to a particular feature, the single phase signal is I&Q demodulated at a frequency $f_s$ to get low frequency amplitudes $V_C$, $V_S$ and $I_C$, $I_S$ :

$$\hat{L}_a = \frac{|V_S I_C - V_C I_S|}{\omega_s (I_C^2 + I_S^2)}$$

Thus, a 2D representation of voltage and current waveforms can be obtained from the current and voltage of the single phase.

According to a particular feature, the average apparent inductance $L_{DC}$ is estimated using a low pass filter (LPF) and the oscillating component value $\Delta L_{ff}$ of estimated apparent inductance oscillating at rotor frequency with respect to rotor position $\theta(t)$ is obtained by an incoherent heterodyne demodulation at motor rotation angular speed $\Omega_R = d\theta/dt$.

Thus, the variation of the apparent inductance with respect to rotor position can be estimated, reflecting changes in air gap resulting from dynamic eccentricity. This observed variation is not polluted by other (e.g. faster) variations resulting from rotor slot harmonic or from measurement noise.

According to a particular feature, the average apparent inductance is estimated using a low pass filter LPF and the oscillating component value of estimated inductance oscillating at rotor frequency with respect to rotor position $\theta(t)$ is obtained by an incoherent heterodyne demodulation at motor rotation angular speed $\Omega_R = d\theta/dt$.

Thus, a precise position of the rotor position is not strictly required. Heterodyne demodulation identifies the desired component oscillating at rotor frequency and rejects the components oscillating at other frequencies that do not result from the presence of eccentricities. The low pass filter identifies the average value of apparent inductance resulting from the presence of static eccentricity, without interference from oscillating components.

According to a particular feature, if the rotor $\hat{\theta}(t)$ position is known, a coherent demodulation is applied so that $\Delta L_{fr}$ = $LPF(L(t)cos(\hat{\theta}(t))$ or if the rotor speed $\Omega_R$ is known, an incoherent demodulation is applied and $\Delta L_{fr}$ =

$$\sqrt{LPF(L(t)cos(\Omega_R t)^2 + LPF(L(t)sin(\Omega_R t)^2}$$ or if only stator speed $\omega_s$ is known, an incoherent demodula-

tion is applied, and $\Delta L_{fr}$ = $$\sqrt{LPF(L(t)cos(\omega_S t/P)^2 + LPF(L(t)sin(\omega_S t/P)^2}$$ , where P is the number of pole pairs of the motor and LPF is a low pass filter.

Thus, the level $\Delta L_{fr}$ of the component oscillating at rotor frequency can be determined with any kind of input, using rotor position, rotor frequency or stator frequency, limiting the constraints on the available signal for the implementation of the method. In particular, the stator speed is at least available in any speed drives. In this latter case, the low-pass filter should be dimensioned large enough to accommodate the maximum frequency slip between stator and rotor.

According to a particular feature, the reference apparent inductance value expected in absence of eccentricity is determined for an induction motor as:

$$L_0 = L_s - L_r \frac{L_m^2 (\omega_s - \omega_r)^2}{R_r^2 + L_r^2 (\omega_s - \omega_r)^2}$$

Where $L_s$, $L_r$, $L_m$ are stator, rotor and mutual inductances of the motor, $R_s$, $R_r$ are stator and rotor resistances, $\omega_s$ and $\omega_r$ are angular speeds of stator and rotor electric waveforms or the reference apparent inductance $L_0$ is determined as:

$$L_0 = L_s \sigma + R_r \frac{L_m^2}{L_r^2} \left( \frac{\gamma \omega_r + \frac{R_r}{L_r}}{(\omega_s - \omega_r)} \right) \frac{1}{1 + \gamma^2} \frac{1}{\omega_s}$$

where $L_s$, $L_r$, $L_m$ are stator, rotor and mutual inductances of the motor, $R_s$, $R_r$ are stator and rotor resistances, $\omega_s$ and $\omega_r$ are angular speeds of stator and rotor electric waveforms. The coefficient $\gamma = \frac{1}{(\omega_s - \omega_r)} \left( \frac{R_r}{L_r} - \frac{d\overline{log(\omega_s - \omega_r)}}{dt} \right)$ contains a derivative term of a difference between stator and rotor angular speeds.

Thus, the variation of the apparent inductance of an induction motor is formulated to accommodate for changes in apparent inductance as function of speed and torque. In steady state, the formulation provides an accurate estimate of inductance variation in absence of eccentricity fault.

Thus, the second formulation improves the accuracy of the apparent inductance also in transient state conditions, where speed is subject to changes, as in motor acceleration or deceleration phase.

According to a particular feature, the reference apparent inductance value in absence of eccentricity is determined with an Artificial Intelligence method that takes torque, stator speed and acceleration as inputs.

Thus, an accurate estimation law of variations of apparent inductance in absence of fault can get determined on a large range of operation conditions, without inaccuracies resulting from the usage of simplified formulation. The Artificial Intelligence method is trained on initial waveform at various speed and torque conditions.

According to a particular feature, static eccentricity $\delta_{SE}$ and dynamic eccentricity $\delta_{SE}$ are determined as:

$$\begin{cases} \delta_{SE} \cong \frac{\Delta L_{DC}}{(\omega_s - \omega_r)^2} \frac{1}{2 L_r L_{mo}^2} (1 + (\omega_s - \omega_r)^2 L_r^2 / R_r^2) \\ \delta_{DE} \cong \frac{\Delta L_{fr}}{(\omega_s - \omega_r)^2} \frac{1}{2 L_r L_{mo}^2} (1 + (\omega_s - \omega_r)^2 L_r^2 / R_r^2) \end{cases}$$

or if, $L_{m0}$, $R_r$, $L_r$ are known and $R_r \gg |\omega_s - \omega_r| L_r$ as

$$\begin{cases} \delta_{SE} \cong \dfrac{\Delta L_{DC}}{(\omega_s - \omega_r)^2} \dfrac{1}{2L_r L_{mo}^2} \\[3mm] \delta_{DE} \cong \dfrac{\Delta L_{fr}}{(\omega_s - \omega_r)^2} \dfrac{1}{2L_r L_{mo}^2} \end{cases}$$

or as

$$\begin{cases} \delta_{SE} \propto \dfrac{\Delta L_{DC}}{(\omega_s - \omega_r)^2} \\[3mm] \delta_{DE} \propto \dfrac{\Delta L_{fr}}{(\omega_s - \omega_r)^2} \end{cases}$$

where

$$\Delta L_{DC} = L_{DC} - L_o$$

Thus, the static and dynamic eccentricities can get individually identified from measured variations of apparent inductance. A change in average apparent inductance reflects the presence of static eccentricity. A change in level of component oscillating at rotor frequency reveals the presence of dynamic eccentricity.

BRIEF DESCRIPTION OF THE DRAWINGS

The characteristics of the invention will emerge more clearly from a reading of the following description of example embodiments, the said description being produced with reference to the accompanying drawings, among which:

Fig. 1 represents an example of a view of an electric motor with static and dynamic eccentricities;
Fig. 2 represents an example of a system for controlling a motor in which a device for determining static and dynamic eccentricities of an electric motor is implemented;
Fig. 3 represents an architecture of a controller that is able to determine static and dynamic eccentricities of an electric motor according to the invention;
Fig. 4 represents an example of an algorithm for determining static and dynamic eccentricities of an electric motor according to the invention;
Fig. 5 shows an example of apparent inductance waveform determined according to the present invention.

DESCRIPTION

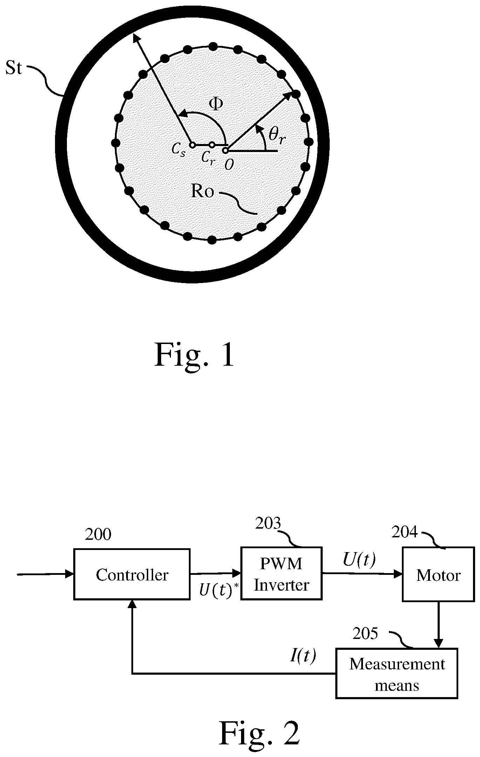

**Fig. 1** represents an example of a view of an electric motor with static and dynamic eccentricities.
In Fig. 1, a rotor Ro and a stator St are shown. As shown in Fig. 1, an eccentricity is present. The air gap between the rotor Ro and the stator is not constant. The air gap seen from a stator conductor positioned at stator direction $\phi$ can be expressed as a function of rotor position $\theta_r$, stator direction $\phi$, nominal airgap $g_0$ and eccentricity ratios $\delta_{SE}$ and $\delta_{DE}$ as :

$$g(\phi, \theta_r) = g_0(K_c + \delta_{SE} \cos(\phi) + \delta_{DE} \cos(\phi - \theta_r))$$

Where Kc is the carter coefficient of the motor. Points $C_s$ and $C_r$ represent the symmetry axis of stator and of rotor respectively, and point O represents the rotation axis of rotor. The static eccentricity is caused by misalignment of symmetry axis rotor and stator (Point $C_r$ and $C_s$). The dynamic eccentricity is caused by misalignment of symmetry axis and rotation axis of rotor (points $C_r$ and O). In the latter case, the position of Point $C_r$ varies with rotor position, causing vibration and exchanges of mechanical energies that can harm the motor.
**Fig. 2** represents an example of a system for controlling a motor in which a device for determining static and dynamic eccentricities of an electric motor is implemented.
The system comprises a controller 200 that controls a motor 204 through a pulse width modulation (PWM) inverter 203.
The controller 200 provides control signals V(t)* to the pulse width modulation inverter 203 that are representative of a desired voltage V(t) waveform.

The system further comprises measurement means 205 that provide samples of current $I(t)$ of at least one phase of the motor to the controller 200. In a variant, the motor 204 is equipped with a position sensor, and measurement means 205 also provides the measured angular speed $\Omega_r$ of the motor 204 to the controller 200.

The controller determines the voltage signal $V(t)^*$ to reach a desired stator speed target $\omega_s$ according to state of art open-loop (e.g. V/f control) or closed loop control (e.g. Field Oriented Current vector control) methods.

According to the invention, the controller 200 is able to determine dynamic and static eccentricities of the motor 204.

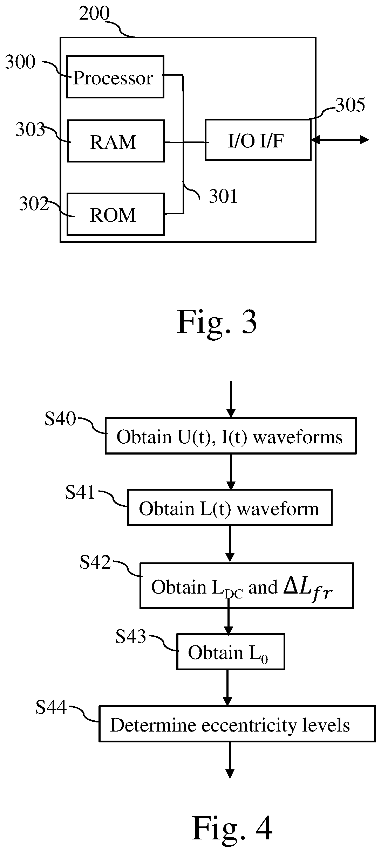

**Fig. 3** represents an architecture of the controller that is able to determine static and dynamic eccentricities of an electric motor according to the invention.

The controller 200 has, for example, an architecture based on components connected by a bus 301 and a processor 300 controlled by a program as disclosed in Fig. 4.

The bus 301 links the processor 300 to a read only memory ROM 302, a random-access memory RAM 303 and an input output I/O IF interface 305.

The input output I/O IF interface 305 enables the processor 300 to transfer control signals to the pulse width modulated inverter 203 and to receive measured current I(t) flowing through the motor 204.

The memory 303 contains registers intended to receive variables and the instructions of the program related to the algorithm as disclosed in Fig. 4.

The read-only memory, or possibly a Flash memory 302, contains instructions of the programs related to the algorithm as disclosed in Fig. 4, that are, when the controller 200 is powered on, loaded to the random-access memory 303. Alternatively, the program may also be executed directly from the ROM memory 302.

The calculation performed by the controller 200 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the controller 200 includes circuitry, or a device including circuitry, causing the controller 200 to perform the program related to the algorithm as disclosed in Fig. 4.

**Fig. 4** represents an example of an algorithm for determining static and dynamic eccentricities of an electrical motor according to the invention.

At step S40, the controller 200 obtains the current waveform I(t) flowing through the motor 204. The voltage waveform V(t) effectively applied to the motor by the PWM inverter 203 may be measured or derived from the signal V(t)*.

In a first variant, voltage and current waveforms are representative of a voltage reference and of measured current levels ( $V_{dq}^*$ , $I_{dq}$) in a dq framework rotating at stator frequency. In such case, the controller 200 comprises a dq transform module.

In a second variant, voltage and current waveforms are as example representative of voltage reference and measured current levels of polyphase signals ($V_{abc}$, $I_{abc}$).

In a third variant, voltage and current waveforms are as example representative of voltage reference and measured current level of a single phase ($V_a$, $I_a$).

At step S41, the controller 200 determines the apparent inductance of the motor 204 from the current I(t) flowing through the motor 204 and the voltage V(t) applied to the motor.

In the first variant, the voltage and current waveforms are available in ($I_d$, $I_q$) and ( $V_d^*, V_q^*$ ), The apparent inductance is as example determined as:

$$\hat{L}_{dq} = \frac{\left(|V_q^* I_d - V_d^* I_q|\right)}{\omega_s \left(I_d^2 + I_q^2\right)}$$

, where $\omega_s = 2\pi f_s$, is the rotational speed of the dq framework.

In the second variant, the controller 200 transforms the 3-phase waveforms in $\alpha\beta$ framework with a Concordia transformation.

The Concordia transformation is defined as :

$$\hat{X}_{\alpha\beta} = \sqrt{2/3} \begin{bmatrix} 1 & -1/2 & -1/2 \\ 0 & \sqrt{3}/2 & -\sqrt{3}/2 \end{bmatrix} \hat{X}_{abc}$$

and the apparent inductance is determined as

$$\hat{L}_{\alpha\beta} = \frac{|V_\beta I_\alpha - V_\alpha I_\beta|}{\omega_s(I_\alpha^2 + I_\beta^2)}$$

where $\hat{X}_{abc}$ is the vector to be transformed.

In the third variant, the apparent inductance waveform is estimated from single phase signals ($V_a$, $I_a$), which are I&Q demodulated at a frequency $f_s$ to get low frequency amplitudes $V_C$, $V_S$ and $I_C$, $I_S$ and the apparent inductance is determined as

$$\hat{L}_a = \frac{|V_S I_C - V_C I_S|}{\omega_s(I_C^2 + I_S^2)}$$

Heterodyne demodulation comprises oscillators, mixers and low pass filters. It should be noted that the bandwidth of the low pass filters should be large enough to keep the rotor rotational frequency, and steep enough to get rid of second harmonic brought by heterodyne demodulation.

In a particular mode of realization, the signal is angular resampled, so that the low pass filter is implemented with constant IIR coefficient for any speed.

In a particular implementation of the second and third variants, the voltage vector is rotated by angle $2\pi\Delta Tf_s$ function of the controller 200 delay $\Delta T$ and of the stator frequency $f_s$, to compensate for the timing difference between effectiveness of voltage reference and measurement of associated current vector.

Other estimation techniques of apparent inductance are possible, as long as it keeps instantaneous variation of apparent inductance with position.

At step S42, the controller 200 determines an average value $L_{DC}$ of the apparent inductance and an oscillating component value $\Delta L_{fr}$ of the apparent inductance.

If the estimated apparent inductance level can be supposed immune to interference, the average value and oscillating component value are identified from estimated maximum and minimum inductance measurements $L_{max}$ and $L_{min}$ within at least one period of rotor frequency.

$$\Delta L_{fr} = (L_{max} - L_{min})/2$$

In a preferred implementation of invention, the oscillating component value $\Delta L_{fr}$ is the component of estimated inductance oscillating at rotor frequency. The inductance waveform obtained at step S41 superposes a constant $L_{DC}$ level and a variation level $\Delta L_{fr}$ with respect to rotor position $\theta(t)$, plus additional variation levels oscillating at other frequencies.

$$L(t) = L_{DC} + \Delta L_{fr}cos(\theta(t)) + n_L(t)$$

Where $n_L(t)$ is the sum of variation levels oscillating at frequencies distinct from DC and from the rotor frequency, and includes measurement plus computation noise.

Average inductance level $L_{DC}$ is estimated using a low pass filter LPF as $L_{DC}$ = LPF(L(t)). Variation level $\Delta L$ with respect to rotor position $\hat{\theta}(t)$ is obtained by heterodyne demodulation at motor rotation frequency $\Omega_R = d\theta/dt$.

If the rotor $\hat{\theta}(t)$ position is known, a coherent demodulation is applied so that $\Delta L_{fr}$ = LPF(L(t)cos($\hat{\theta}(t)$)).

If the rotor speed $\Omega_R$ is known, an incoherent demodulation is applied, and

$$\Delta L_{fr} = \sqrt{LPF(L(t)cos(\Omega_R t)^2 + LPF(L(t)sin(\Omega_R t)^2}$$

If only stator electric speed $\omega_s$ is known, an incoherent demodulation is applied, and get

$$\Delta L_{fr} = \sqrt{LPF(L(t)cos(\omega_S t/P)^2 + LPF(L(t)sin(\omega_S t/P)^2}$$

, where $P$ is the number of pole pairs of the motor. In this case, the bandwidth of the low-pass filter is accommodated to include the maximum affordable slip between rotor and stator frequencies.

At step S43, the controller 200 estimates a reference inductance value $L_0$ expected in absence of eccentricity.

For example, $L_0$ is identified for an induction machine (IM) operating in steady state at stator frequency $\omega_s$ and at a torque identified by the difference between stator frequency and the frequency $\omega_r$ as

$$L_0 = L_s - L_r \frac{L_m^2(\omega_s - \omega_r)^2}{R_r^2 + L_r^2(\omega_s - \omega_r)^2}$$

Where $L_s$, $L_r$, $L_m$ are stator, rotor and mutual inductances of the motor, $R_s$, $R_r$ are stator and rotor resistances, $\omega_s$ and $\omega_r$ are angular speeds of stator and rotor electric waveforms.

The angular speed of rotor electric signal $\omega_r$ is determined from the rotor speed $\Omega_r$ and the number of pole pairs $P$: $\omega_r = P\Omega_r$. As example, speed $\Omega_r$ is acquired at step S40 from the measurement means 205.

As another example, rotor speed $\Omega_r$ is estimated by processor 200 using a sensorless observer, or determined from the applied torque level.

As yet another example, $\Omega_r$ is estimated using a PLL on the inductance waveform estimated at step S42.

For example, $L_0$ is identified as

$$L_0 = L_s\sigma + R_r \frac{L_m^2}{L_r^2} \left( \frac{\gamma\omega_r + {R_r}/{L_r}}{(\omega_s - \omega_r)} \right) \frac{1}{1 + \gamma^2} \frac{1}{\omega_s}$$

Where $L_s$, $L_r$, $L_m$ are stator, rotor and mutual inductances of the induction motor, $R_s$, $R_r$ are stator and rotor resistances, $\omega_s$ and $\omega_r$ are angular speeds of stator and rotor electric waveforms. $\sigma = 1 - \frac{L_m^2}{L_r L_s}$.

The coefficient $\gamma = \frac{1}{(\omega_s - \omega_r)} \left( \frac{R_r}{L_r} - \frac{dlog(\omega_s - \omega_r)}{dt} \right)$ contains a derivative term of a difference between angular speeds of stator and rotor electric waveforms.

For example, $L_0$ is identified with an Artificial Intelligence (AI) method that takes torque, stator speed and acceleration as inputs. The artificial intelligence method is trained on the healthy motor to replicate observed apparent inductance $L_{DC}$ in a variety of torque, speed and acceleration situations. The AI method replicates the variations of apparent inductances in all situations, with impact of any physics at work such as iron losses not modelled in the other examples. As example, the AI method consists in a convolutional neural network (CNN) and is implemented in software or in hardware.

At step S44, the controller 200 estimates static and dynamic eccentricities from the observed variations of the apparent inductance.

According to the invention, the mutual inductance $L_m$ varies according to eccentricities $\delta_{SE}$ and $\delta_{DE}$ according to $L_m = L_{m0}\cdot(1 + \delta_{SE} + \delta_{DE} \cos(\theta_R))$. Considering $\delta_{DE} \ll 1$, $\delta_{SE} \ll 1$, we get $\Delta L_m^2 \cong \Delta L_{mo}^2 (1 + 2\delta_{SE} + 2\delta_{DE} \cos(\theta_R))$.

From the earlier formulation of apparent inductance, this means:

$$\Delta L_{DC} = L_{DC} - L_o \cong \frac{L_r(\omega_s - \omega_r)^2}{R_r^2 + L_r^2(\omega_s - \omega_r)^2} \Delta L_{mo}^2 (1 + 2\delta_{SE})$$

$$\Delta L_{fr} \cong \frac{L_r(\omega_s - \omega_r)^2}{R_r^2 + (\omega_s - \omega_r)^2 L_r^2} \Delta L_{mo}^2 2\delta_{DE}$$

In a variant, $L_{m0}$, $R_r$ and $L_r$ are known (e.g. from FEA (Finite Element Analysis) or from nameplate data of the motor). Then eccentricities are resolved as

$$\begin{cases} \delta_{SE} \cong \dfrac{\Delta L_{DC}}{(\omega_s - \omega_r)^2} \dfrac{R_r^2}{2L_r L_{mo}^2} (1 + (\omega_s - \omega_r)^2 L_r^2/R_r^2) \\[3mm] \delta_{DE} \cong \dfrac{\Delta L_{fr}}{(\omega_s - \omega_r)^2} \dfrac{R_r^2}{2L_r L_{mo}^2} (1 + (\omega_s - \omega_r)^2 L_r^2/R_r^2) \end{cases}$$

In a second variant, $L_{m0}$, $R_r$, $L_r$ are known and $R_r \gg |\omega_s - \omega_r| L_r$. Eccentricities are identified from

$$\begin{cases} \delta_{SE} \cong \dfrac{\Delta L_{DC}}{(\omega_s - \omega_r)^2} \dfrac{R_r^2}{2 L_r L_{mo}^2} \\ \delta_{DE} \cong \dfrac{\Delta L_{fr}}{(\omega_s - \omega_r)^2} \dfrac{R_r^2}{2 L_r L_{mo}^2} \end{cases}$$

In a third variant, eccentricity levels are identified from its variations according to following laws :

$$\begin{cases} \delta_{SE} \propto \dfrac{\Delta L_{DC}}{(\omega_s - \omega_r)^2} \\ \delta_{DE} \propto \dfrac{\Delta L_{fr}}{(\omega_s - \omega_r)^2} \end{cases}$$

where

$$\Delta L_{DC} = L_{DC} - R_o.$$

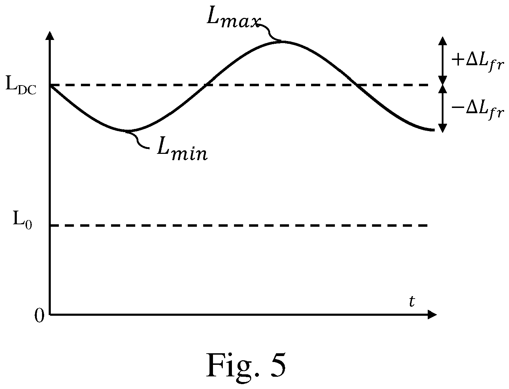

**Fig. 5** shows an example of the apparent inductance waveform determined according to the present invention.

In the Fig. 5, the waveform representative of the apparent inductance of the motor is represented.

The average value $L_{DC}$, the oscillating component value $\Delta L_{fr}$ of the apparent inductance of the motor, the reference apparent inductance value $L_0$ expected in absence of eccentricity and the maximum and minimum inductance measurements $L_{max}$ and $L_{min}$ are represented.

## Claims

1. A method for determining static and dynamic eccentricities of an electric motor, **characterized in that** the method comprises the steps of:

   - obtaining voltage and current waveforms of the electric motor;
   - obtaining a waveform representative of an apparent inductance of the motor from the obtained voltage and current waveforms;
   - determining an average value ($L_{DC}$) and an oscillating component value ($\Delta L_{fr}$) of the apparent inductance of the motor from the obtained waveform representative of the apparent inductance of the motor;
   - determining a reference apparent inductance value ($L_o$) expected in absence of eccentricity;
   - determining static and dynamic eccentricities from the determined average value and the determined oscillating component value of the apparent inductance of the motor and from the determined reference apparent inductance of the motor.

2. The method according to claim 1, **characterized in that** the voltage waveform is representative of a voltage reference and the current waveform is obtained in a dq framework rotating at stator frequency.

3. The method according to claim 2, **characterized in that** the apparent inductance waveform is estimated as:

$$\hat{L}_{dq} = \frac{(|V_q^* I_d - V_d^* I_q|)}{\omega_s(I_d^2 + I_q^2)}$$ , where $\omega_s = 2\pi f_s$, is the rotational speed of the dq framework.

4. The method according to claim 1, **characterized in that** the voltage waveform is representative of a voltage reference and the current waveform is representative of polyphase current signals, where the polyphase current signals are transformed in an αβ framework with Concordia transformation and the inductance waveform is estimated as:

$$\hat{L}_{\alpha\beta} = \frac{|V_\beta I_\alpha - V_\alpha I_\beta|}{\omega_s(I_\alpha^2 + I_\beta^2)}$$

where the Concordia transformation is defined as:

$$\hat{X}_{\alpha\beta} = \sqrt{2/3} \begin{bmatrix} 1 & -1/2 & -1/2 \\ 0 & \sqrt{3}/2 & -\sqrt{3}/2 \end{bmatrix} \hat{X}_{abc}.$$

5. The method according to claim 1, **characterized in that** the voltage waveform is representative of a voltage reference of a single phase and the current waveform is the current flowing through the single phase of the electrical motor.

6. The method according to claim 5, **characterized in that** the single phase signal is I&Q demodulated at a frequency $f_s$ to get low frequency amplitudes $V_C$, $V_S$ and $I_C$, $I_S$:

$$\hat{L}_a = \frac{|V_S I_C - V_C I_S|}{\omega_s(I_C^2 + I_S^2)}$$

7. The method according to any of the claims 1 to 6, **characterized in that** the average apparent inductance $L_{DC}$ is estimated using a low pass filter (LPF) and the oscillating component value $\Delta L_{fr}$ of estimated apparent inductance oscillating at rotor frequency with respect to rotor position $\theta(t)$ is obtained by an incoherent heterodyne demodulation at motor rotation angular speed $\Omega_R = d\theta/dt$.

8. The method according to claim 7, **characterized in that** if the rotor $\hat{\theta}(t)$ position is known, a coherent demodulation is applied so that $\Delta L_{fr} = LPF(L(t)cos(\hat{\theta}(t)))$ or if the rotor speed $\Omega_R$ is known, an incoherent demodulation is applied and

$$\Delta L_{fr} = \sqrt{LPF(L(t)cos(\Omega_R t)^2 + LPF(L(t)sin(\Omega_R t)^2}$$ or if only stator speed $\omega_s$ is known, an inco-

herent demodulation is applied, and $\Delta L_{fr} = \sqrt{LPF(L(t)cos(\omega_s t/P)^2 + LPF(L(t)sin(\omega_s t/P)^2}$, where $P$ is the number of pole pairs of the motor.

9. The method according to any of the claims 1 to 8, **characterized in that** the reference apparent inductance value expected in absence of eccentricity is determined for an induction motor as:

$$L_0 = L_s - L_r \frac{L_m^2(\omega_s - \omega_r)^2}{R_r^2 + L_r^2(\omega_s - \omega_r)^2}$$

Where $L_s$, $L_r$, $L_m$ are stator, rotor and mutual inductances of the motor, $R_s$, $R_r$ are stator and rotor resistances, $\omega_s$ and $\omega_r$ are angular speeds of stator and rotor waveforms or the reference apparent inductance $L_0$ is determined as:

$$L_0 = L_s \sigma + R_r \frac{L_m^2}{L_r^2}\left(\frac{\gamma\omega_r + R_r/L_r}{(\omega_s - \omega_r)}\right)\frac{1}{1+\gamma^2}\frac{1}{\omega_s}$$

Where $L_s$, $L_r$, $L_m$ are stator, rotor and mutual inductances of the induction motor, $R_s$, $R_r$ are stator and rotor resistances, $\omega_s$ and $\omega_r$ are angular speeds of stator and rotor electric waveforms. The coefficient $\gamma = \frac{1}{(\omega_s - \omega_r)}\left(\frac{R_r}{L_r} - \frac{dlog(\omega_s - \omega_r)}{dt}\right)$ containing a derivative term of a difference between stator and rotor angular speeds.

10. The method according to any of the claims 1 to 9, **characterized in that** the reference apparent inductance value in absence of eccentricity is determined with an Artificial Intelligence software that takes torque, stator speed and acceleration as inputs.

11. The method according to any of the claims 1 to 10, **characterized in that** static $\delta_{SE}$ and dynamic eccentricities $\delta_{SE}$ are determined as:

$$\begin{cases} \delta_{SE} \cong \dfrac{\Delta L_{DC}}{(\omega_s - \omega_r)^2} \dfrac{R_r^2}{2L_r L_{mo}^2} (1 + (\omega_s - \omega_r)^2 L_r^2 / R_r^2) \\ \delta_{DE} \cong \dfrac{\Delta L_{fr}}{(\omega_s - \omega_r)^2} \dfrac{R_r^2}{2L_r L_{mo}^2} (1 + (\omega_s - \omega_r)^2 L_r^2 / R_r^2) \end{cases}$$

or as

$$\begin{cases} \delta_{SE} \cong \dfrac{\Delta L_{DC}}{(\omega_s - \omega_r)^2} \dfrac{R_r^2}{2L_r L_{mo}^2} \\ \delta_{DE} \cong \dfrac{\Delta L_{fr}}{(\omega_s - \omega_r)^2} \dfrac{R_r^2}{2L_r L_{mo}^2} \end{cases}$$

or as

$$\begin{cases} \delta_{SE} \propto \dfrac{\Delta L_{DC}}{(\omega_s - \omega_r)^2} \\ \delta_{DE} \propto \dfrac{\Delta L_{fr}}{(\omega_s - \omega_r)^2} \end{cases}$$

where

$$\Delta L_{DC} = L_{DC} - R_o$$

12. A device for determining eccentricities of an electric motor, **characterized in that** the device comprises:

- means for obtaining voltage and current waveforms of the electric motor;
- means for obtaining a waveform representative of an apparent inductance of the motor from the obtained voltage and current waveforms;
- means for determining an average value ($L_{DC}$) and an oscillating component value ($\Delta L_{fr}$) of the inductance of the motor from the obtained waveform representative of the inductance of the motor;
- means for determining a reference apparent inductance value ($L_o$) expected in absence of eccentricity;
- means for determining static and dynamic eccentricities from the determined average value and the determined oscillating component value of the apparent inductance of the motor and from the determined reference apparent inductance of the motor.

Fig. 1

Fig. 2

200

300 — Processor

303 — RAM          I/O I/F ——305

302 — ROM          301

# Fig. 3

S40 — Obtain U(t), I(t) waveforms

S41 — Obtain L(t) waveform

S42 — Obtain $L_{DC}$ and $\Delta L_{fr}$

S43 — Obtain $L_0$

S44 — Determine eccentricity levels

# Fig. 4

Fig. 5

Europäisches
Patentamt

European
Patent Office

Office européen
des brevets

## EUROPEAN SEARCH REPORT

**Application Number**

EP 24 30 6110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZIJIAN LIU ET AL: "Diagnosis of air-gap eccentricity and partial demagnetisation of an interior permanent magnet synchronous motor based on inverse transient complex inductance vector theory", IET ELECTRIC POWER APPLICATIONS, IET, UK, vol. 12, no. 8, 29 May 2018 (2018-05-29), pages 1166-1175, XP006101339, ISSN: 1751-8660, DOI: 10.1049/IET-EPA.2018.0003 | 1,12 | INV. H02P29/024 |
| A | * page 1166, right-hand column, paragraph Introduction * <br> * page 1168, right-hand column, paragraph 3.1 * <br> * page 1167, left-hand column, paragraph 2nd * <br> * page 1166, left-hand column * <br> ----- | 2-11 | |
| X | Stavrou Andreas: "Andreas Stavrou Impedance vector monitoring strategy for on-line detection of eccentricity in induction motors", <br> , <br> 2 September 2006 (2006-09-02), pages 1-5, XP093229632, <br> Retrieved from the Internet: <br> URL:https://masters.donntu.ru/2009/eltf/shevtsov/library/Source3.htm <br> [retrieved on 2024] | 1,12 | |
| A | * figures 4,6 * <br> ----- | 2-11 | TECHNICAL FIELDS SEARCHED (IPC) <br><br> H02P |
| X | US 2023/139907 A1 (SHAHID ALI [IN] ET AL) 4 May 2023 (2023-05-04) | 1,12 | |
| A | * paragraph [0003] * <br> * paragraph [0018] * <br> * paragraph [0023] * <br> ----- <br><br> -/-- | 2-11 | |

The present search report has been drawn up for all claims

| Place of search | Date of completion of the search | Examiner |
|---|---|---|
| Munich | 5 December 2024 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 30 6110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAWAD FAIZ ET AL: "Eccentricity fault diagnosis indices for permanent magnet machines: state-of-the-art", IET ELECTRIC POWER APPLICATIONS, IET, UK, vol. 13, no. 9, 31 May 2019 (2019-05-31), pages 1241-1254, XP006101700, ISSN: 1751-8660, DOI: 10.1049/IET-EPA.2018.5751 * the whole document * | 1-12 | |
| A | ROGOZIN G G ET AL: "Induction motor eccentricity diagnosis using impedance spectrum and shaft voltage", ELECTRICAL MACHINES (ICEM), 2010 XIX INTERNATIONAL CONFERENCE ON, IEEE, PISCATAWAY, NJ, USA, 6 September 2010 (2010-09-06), pages 1-3, XP031779736, ISBN: 978-1-4244-4174-7 * the whole document * | 1-12 | |
| A | KR 101 841 577 B1 (UNIV KOREA RES & BUS FOUND [KR]) 4 May 2018 (2018-05-04) * the whole document * | 1-12 | TECHNICAL FIELDS SEARCHED (IPC) |

-/--

The present search report has been drawn up for all claims

| Place of search | Date of completion of the search | Examiner |
|---|---|---|
| Munich | 5 December 2024 | Fligl, Stanislav |

EPO FORM 1503 03.82 (P04C01)

Europäisches
Patentamt

European
Patent Office

Office européen
des brevets

**EUROPEAN SEARCH REPORT**

**Application Number**

**EP 24 30 6110**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DRIF M'HAMED ET AL: "Discriminating the Simultaneous Occurrence of Three-Phase Induction Motor Rotor Faults and Mechanical Load Oscillations by the Instantaneous Active and Reactive Power Media Signature Analyses", IEEE TRANSACTIONS ON INDUSTRIAL ELECTRONICS, vol. 59, no. 3, 18 August 2011 (2011-08-18), pages 1630-1639, XP093027894, USA ISSN: 0278-0046, DOI: 10.1109/TIE.2011.2161252 * the whole document * | 1-12 | |

TECHNICAL FIELDS
SEARCHED        (IPC)

The present search report has been drawn up for all claims

| Place of search | Date of completion of the search | Examiner |
|---|---|---|
| Munich | 5 December 2024 | Fligl, Stanislav |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

page 3 of 3

## ANNEX TO THE EUROPEAN SEARCH REPORT
## ON EUROPEAN PATENT APPLICATION NO.

EP 24 30 6110

05-12-2024

| Patent document cited in search report | | Publication date | Patent family member(s) | | Publication date |
|---|---|---|---|---|---|
| US 2023139907 | A1 | 04-05-2023 | CA | 3157014 A1 | 29-04-2023 |
| | | | CN | 116070074 A | 05-05-2023 |
| | | | EP | 4174503 A1 | 03-05-2023 |
| | | | US | 2023139907 A1 | 04-05-2023 |
| KR 101841577 | B1 | 04-05-2018 | NONE | | |